(19) **Europäisches Patentamt / European Patent Office / Office européen des brevets**

(11) **EP 3 049 478 B1**

(12) **EUROPEAN PATENT SPECIFICATION**

(45) Date of publication and mention
of the grant of the patent:
**01.08.2018 Bulletin 2018/31**

(21) Application number: **13894279.2**

(22) Date of filing: **26.09.2013**

(51) Int Cl.:
**C08L 63/00** (2006.01)    **C08L 71/02** (2006.01)
**C09D 163/00** (2006.01)   **C09J 163/00** (2006.01)
**C08L 63/04** (2006.01)    **C09D 163/04** (2006.01)
**C09J 163/04** (2006.01)

(86) International application number:
**PCT/CN2013/084305**

(87) International publication number:
**WO 2015/042823 (02.04.2015 Gazette 2015/13)**

(54) **A CURABLE EPOXY RESIN COMPOSITION**

HÄRTBARE EPOXIDHARZZUSAMMENSETZUNG

COMPOSITION DE RÉSINE ÉPOXYDE DURCISSABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.08.2016 Bulletin 2016/31**

(73) Proprietor: **Blue Cube IP LLC
Midland, Michigan 48674 (US)**

(72) Inventors:
• **FENG, Yanli
Shanghai 201210 (CN)**
• **ZHANG, Yi
Shanghai 200042 (CN)**

• **DU, Wei
Shanghai 201100 (CN)**
• **XIE, Rui
Texas 77584 (US)**
• **XIE, Demei
Shanghai 201203 (CN)**
• **GONG, Yonghua
Shanghai 201100 (CN)**

(74) Representative: **Greaves Brewster LLP
Copa House
Station Road
Cheddar, Somerset BS27 3AH (GB)**

(56) References cited:
**WO-A1-2010/102421    CN-A- 102 099 417
DE-A1- 4 429 189    US-A1- 2011 114 257**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a curable epoxy resin composition. The present invention also relates to a process for preparing such composition.

INTRODUCTION

Epoxy resins are widely used in a wide range of applications. Cured epoxy resins display thermal and chemical resistance, but known cured epoxy resins usually lack toughness and tend to be brittle. Many applications such as insulating composites, pressure vessels, and light emitting diode encapsulation also require transparent cured epoxy resins. Such transparent cured epoxy resins usually require a clarity value of at least 30%.

Toughening agents are usually added to improve the toughness of cured epoxy resins. Conventional toughening agents include core-shell rubber, carboxyl terminated butadiene acrylonitrile rubber, high molecular weight polyols, and amphiphilic block copolymers. Epoxy resin compositions comprising rubber toughening agents usually have viscosities too high for use in some applications. Upon curing, such epoxy resin compositions usually are not transparent and show a decrease of glass transition temperature ($T_g$) compared to conventional epoxy resins. In contrast, epoxy resin compositions comprising high molecular weight polyols or amphiphilic block copolymers usually have satisfactory viscosities but, unfortunately, are not transparent upon curing.

Therefore, it is desirable to provide a curable epoxy resin composition which upon curing provides a cured thermoset product that is transparent and has better toughness while maintaining $T_g$ compared to a cured thermoset product made from a conventional epoxy resin.

US 2011/114257 discloses novel impact modifiers obtained by the reaction of amphiphilic block copolymers, which include a carboxylic acid group prepared from the reaction of an intramolecular anhydride of a di- or tricarboxylic acid with at least one amphiphilic block copolymer including at least one hydroxyl group.

SUMMARY OF THE INVENTION

The present invention provides a novel curable epoxy resin composition that offers a solution to the problems described above. A cured product made from such composition has a clarity value of at least 30% and exhibits better toughness as evidenced by higher impact strength while maintaining $T_g$ compared to conventional epoxy resins upon curing.

In a first aspect, the present invention includes a curable epoxy resin composition comprising:

(a) at least one epoxy resin comprising, based on the total epoxy resin weight, at least 50 weight percent (wt%) of an epoxy resin (A) comprising one or more diglycidyl ethers of bisphenol A or diglycidyl ethers of bromobisphenol A; oligomeric or polymeric diglycidyl ethers of bisphenol A; oligomeric or polymeric diglycidyl ethers of tetrabromobisphenol A; diglycidyl ethers of bisphenol F or their derivatives; epoxy novolac resins; epoxy cresol novolac resins; or mixtures thereof;

(b) a curing agent selected from a polyoxypropylenediamine; isophorondiamine; 1,3- cyclohexanebis(methylamine); 4,4'-methylenebis(cyclohexylamine); 1,2-diaminocyclohexane; 4,4'-diaminodicyclohexylmethane; nadic acid anhydride; methyl nadic acid anhydride; copolymers of styrene and maleic acid anhydrides; methyltetrahydrophthalic anhydride; methylhexahydrophthalic anhydride; methyl-(endo)-5-norbornene-2,3-dicarboxylic anhydride; hexahydrophthalic anhydride; tetrahydrophthalic anhydride; pyromellitic dianhydride; ciscyclopentanetetracarboxylic acid dianhydride; hemimellitic anhydride; trimellitic anhydride; naphthalene-1,8-dicarboxylic acid anhydride; phthalic anhydride; dichloromaleic anhydride; dodecenylsuccinic anhydride; glutaric anhydride; maleic anhydride; succinic anhydride; or mixtures thereof; and

(c) a carboxylic acid group containing reaction product of (i) a carboxylic acid or its anhydride compound, and (ii) an amphiphilic block copolymer having at least one anhydride-reactive group, at least one epoxy resin miscible block segment, and at least one epoxy resin immiscible block segment;

wherein the curable epoxy resin composition upon curing has a clarity value of at least 30% as measured by a BYK haze-gard dual haze meter.

In a second aspect, the present invention includes a process for preparing the curable epoxy resin composition of the first aspect. The process comprises admixing

(a) at least one epoxy resin comprising, based on the total epoxy resin weight, at least 50 wt% of an epoxy resin (A) comprising one or more diglycidyl ethers of bisphenol A or diglycidyl ethers of bromobisphenol A; oligomeric or polymeric diglycidyl ethers of bisphenol A; oligomeric or polymeric diglycidyl ethers of tetrabromobisphenol A; diglycidyl ethers of bisphenol F or their derivatives; epoxy novolac resins; epoxy cresol novolac resins; or mixtures thereof;

(b) a curing agent selected from a polyoxypropylenediamine; isophorondiamine; 1,3- cyclohexanebis(methylamine); 4,4'-methylenebis(cyclohexylamine); 1,2-diaminocyclohexane; 4,4'-diaminodicyclohexylmethane; nadic acid anhydride; methyl nadic acid anhydride; copolymers of styrene and maleic acid anhydrides; methyltetrahydrophthalic anhydride; methylhexahydrophthalic anhydride; methyl-(endo)-5-norbornene-2,3-dicarboxylic anhydride; hexahydrophthalic anhydride; tetrahydrophthalic anhydride; pyromellitic dianhydride; ciscyclopentanetetracarboxylic acid dianhydride; hemimellitic anhydride; trimellitic anhydride; naphthalene-1,8-dicarboxylic acid anhydride; phthalic anhydride; dichloromaleic anhydride; dodecenylsuccinic anhydride; glutaric anhydride; maleic anhydride; succinic anhydride; or mixtures thereof; and

(c) a carboxylic acid group containing reaction product of (i) a carboxylic acid or its anhydride compound, and (ii) an amphiphilic block copolymer having at least one anhydride-reactive group, at least one epoxy resin miscible block segment, and at least one epoxy resin immiscible block segment.

The curable epoxy resin composition of the present invention, upon curing, has a clarity value of at least 30% as measured by a BYK haze-gard dual haze meter.

DETECTED DESCRIPTION OF THE INVENTION

DETAILED DESCRIPTION OF THE INVENTION

The curable epoxy resin composition of the present invention may comprise (a) at least one epoxy resin (A) comprising one or more diglycidyl ethers of bisphenol A or their derivatives such as diglycidyl ethers of bromobisphenol A, oligomeric and polymeric diglycidyl ethers of bisphenol A, oligomeric and polymeric diglycidyl ether of tetrabromobisphenol A, and oligomeric and polymeric diglycidyl ethers of bisphenol A and tetrabromobisphenol A; diglycidyl ethers of bisphenol F or their derivatives; epoxy novolac resins; epoxy cresol novolac resins; or mixtures thereof. In some embodiments, the epoxy resin (A) comprises diglycidyl ethers of bisphenol A, diglycidyl ethers of bisphenol F, epoxy novolac resins, epoxy cresol novolac resins, or mixtures thereof. Suitable commercially available epoxy resins may include, for example, D.E.R.™ 332, D.E.R. 383, D.E.R. 354, D.E.R. 331, D.E.R. 330, and D.E.R. 671 bisphenol A epoxy resins; D.E.N.™ 438 and D.E.N. 439 epoxy novolac resins all available from The Dow Chemical Company (D.E.R. and D.E.N. are trademarks of The Dow Chemical Company); or mixtures thereof.

The epoxy resin (A) useful in the present invention may have an epoxide equivalent weight (EEW) of 600 or less, 400 or less, or even 200 or less, and at the same time, 170 or more, 178 or more, or even 181 or more.

The concentration of the epoxy resin (A) may be, based on the total epoxy resin weight, 50 wt% or more, 60 wt% or more, 70 wt% or more, 80 wt% or more, 90 wt% or more, or even 100 wt%. If the concentration of the epoxy resin (A) is less than 50 wt%, cured products made from such curable epoxy resin composition may have a clarity value of less than 30%, according to the test method described in the Examples section below.

The curable epoxy resin composition of the present invention also comprises (b) one or more curing agents selected from nadic acid anhydride (NMA); hexahydrophthalic anhydride (HHPA); methyl hexahydrophathalic anhydride (MHHPA); tetrahydrophthalic anhydride (THPA); methyl tetrahydrophthalic anhydride (MTHPA); methyl nadic acid anhydride; methyl-(endo)-5-norbornene-2,3-dicarboxylic anhydride (METHPA); pyromellitic dianhydride; hemimellitic anhydride; ciscyclopentanetetracarboxylic acid dianhydride; trimellitic anhydride; naphthalene-1,8-dicarboxylic acid anhydride; phthalic anhydride; dichloromaleic anhydride; dodecenylsuccinic anhydride; glutaric anhydride; maleic anhydride; succinic anhydride; copolymers of styrene and maleic acid anhydrides; a polyoxypropylenediamine; isophorone diamine (IPDA); 1,3-cyclohexanebis(methylamine) (1,3-BAC); 4,4'-methylenebis(cyclohexylamine) (PACM); 1,2-diaminocyclohexane (DACH); 4,4'-dianinodicyclohexylmethane (DMDC); or mixtures thereof. The preferred cycloaliphatic polyamine is isophorone diamine.

Suitable commercially available polyoxypropylenediamines may include, for example, JEFFAMINE™ D-230 and JEFFAMINE D-400 polyoxypropylenediamines (both available from Huntsman Corporation), or mixtures thereof.

The curing agent useful in the present invention is generally used in an amount sufficient to cure the curable epoxy resin composition. For example, the molar ratio of total epoxy functionality to total active hydrogen functionality of the curable epoxy resin composition may be 10:1 or lower, 5:1 or lower, or even 1.3:1 or lower, and at the same time, 0.4:1 or higher, 0.5:1 or higher, 0.6:1 or higher, or even 0.7:1 or higher.

The curable epoxy resin composition of the present invention may further comprise (c) a carboxylic acid group-containing reaction product; wherein the reaction product is obtained by reacting: (i) a carboxylic acid and/or an anhydride compound prepared from a carboxylic acid, and (ii) an amphiphilic block copolymer having at least one anhydride-reactive group. The reaction product above is hereinafter referred to as "Reaction Product". The amphiphilic block copolymer herein refers to a block copolymer containing at least one epoxy resin miscible block segment and at least one epoxy resin immiscible block segment. Examples of suitable anhydride-reactive groups of the amphiphilic block copolymer include hydroxyl, amine, or mixtures thereof. The anhydride-reactive group(s) of the amphiphilic block copolymer may react with carboxylic acid group(s) of the carboxylic acid compound and/or anhydride group(s) of the anhydride compound to form a half-ester, which comprises ester group(s) and carboxylic acid group(s). When curing the curable epoxy resin composition, carboxylic acid group(s) in the Reaction Product can further react with epoxy group(s) of the epoxy resins. Preferably, the amphiphilic block copolymer used to prepare the Reaction Product contains at least one hydroxyl functional group, and more preferably at least two hydroxyl functional groups. In some embodiments, a hydroxyl-terminated amphiphilic block copolymer is used.

The Reaction Product useful in the present invention may have an acid value of 10 milligram potassium hydroxide per gram sample (mg KOH/g) or more, 30 mg KOH/g or more, or even 40 mg KOH/g or more, and at the same time, 500 mg KOH/g or less, 100 mg KOH/g or less, or even 60 mg KOH/g or less. The acid value, the number of milligrams of KOH per gram of solid required to neutralize the acid functionality in a resin, is a measure of the amount of acid functionality. Acid value may be determined by the test method described in the Examples section below. The Reaction Product may have a viscosity of 30,000 millipascal.seconds (mPa.s) or less, 20,000 mPa.s or less, or even 10,000 mPa.s or less, and at the same time, 2,000 mPa.s or more, 3,000 mPa.s or more, or even 4,500 mPa.s or more, as determined by the ASTM D-2196 method at 25 °C.

The carboxylic acid compounds used to prepare the Reaction Product can be any carboxylic acid compounds having at least two carboxylic acid groups. The anhydride compounds used to prepare the Reaction Product may include, or may be different from, those anhydride compounds described above as the curing agent of the curable epoxy resin composition. Particularly suitable anhydride compounds used to prepare the Reaction Product include NMA; MTHPA; THPA; MHHPA; HHPA; methyl-(endo)-5-norbornene-2,3-dicarboxylic anhydride; pyromellitic dianhydride; ciscyclopentanetetracarboxylic acid dianhydride; hemimellitic anhydride; trimellitic anhydride; naphthalene-1, 8-dicarboxylic acid anhydride; phthalic anhydride; dichloromaleic anhydride; dodecenylsuccinic anhydride; glutaric anhydride; maleic anhydride; succinic anhydride; or mixtures thereof.

The amphiphillic block copolymer used to prepare the Reaction Product may comprise a blend of two or more amphiphilic block copolymers. The amphiphilic block copolymers include at least two kinds of block segments: one block segment is miscible with epoxy resins and the other block segment is immiscible with epoxy resins. The amphiphillic block copolymer may be an amphiphilic polyether block copolymer. The epoxy resin miscible block segment of the amphiphilic block copolymer may comprise at least one polyether structure. Examples of suitable epoxy resin miscible block segments include a polypropylene oxide block, a polyethylene oxide block, a poly(ethylene oxide-co-propylene oxide) block, poly(ethylene oxide-ran-propylene oxide) block, or mixtures thereof. In some embodiments, the epoxy resin miscible block segment of the amphiphilic block copolymer is a polyethylene oxide block.

The epoxy resin immiscible block segment of the amphiphilic block copolymer used to prepare the Reaction Product may comprise at least one polyether structure containing at least one or more alkylene oxide monomer units having at least four carbon atoms, such as a polyhexylene oxide block, a polydodecylene oxide block, a polyhexadecylene oxide block, or a polybutylene oxide block. In some embodiments, the epoxy resin immiscible block segments of the amphiphilic block copolymer comprise at least one polybutylene oxide block. Generally, the molar ratio of the epoxy resin miscible block segments to the epoxy resin immiscible block segments of the amphiphilic block copolymer may be from 10:1 to 1:10.

The amphiphilic block copolymer used to prepare the Reaction Product may be selected from the group consisting of a diblock, a linear triblock, a linear tetrablock, a higher order multiblock structure, a branched block structure, or a star block structure.

In some embodiments, the amphiphilic block copolymers used to prepare the Reaction Product include amphiphillic polyether diblock copolymers such as poly(ethylene oxide)-b-poly(butylenes oxide) (PEO-b-PBO), amphiphilic polyether triblock copolymers such as poly(ethylene oxide)-b-poly(butylene oxide)-b-poly(ethylene oxide) (PEO-b-PBO-b-PEO), or mixtures thereof. Suitable commercially available amphiphillic block copolymers may include, for example, FORTEGRA™ 100 block copolymer available from The Dow Chemical Company (FORTEGRA is a trademark of The Dow Chemical Company).

Other suitable amphiphilic block copolymers used to prepare the Reaction Product may include, for example, poly(ethylene oxide)-b-poly(ethylene-alternating propylene) (PEO-PEP), poly(ethylene propylene-b-ethylene oxide) block copolymers (PEP-b-PEO), poly(butadiene-b-ethylene oxide) block copolymers (PB-b-PEO), or mixtures thereof.

The amphiphilic block copolymer used to prepare the Reaction Product may have a number average molecular weight of from 1,000 to 20,000 gram per mole (g/mol), from 4,000 to 16,000 g/mol, or from 6,000 to 15,000 g/mol.

The Reaction Product in the curable epoxy resin composition can be prepared by conventional methods. The reaction can be conducted at a temperature from 60 to 160°C, from 80 to 140°C, or from 100 to 120°C. In preparing the Reaction Product, the mole ratio of the carboxylic acid and/or anhydride compound to the amphiphilic block copolymer may be from 20 to 1, from 10 to 1, or from 1 to 1. Preferably, the amphiphilic block copolymer is fully reacted with the carboxylic acid and/or anhydride compound. The reaction may be conducted in the presence of a catalyst, for example, an amine catalyst. Suitable amine catalysts may include benzyldimethylamine, triethylamine, diethyl aminopropylamine or mixtures thereof.

The concentration of the Reaction Product in the curable epoxy resin composition may be, based on the total weight of the curable epoxy resin composition, 1 wt% or more, 2 wt% or more, or even 5 wt% or more, and at the same time, 20 wt% or less, 15 wt% or less, or even 10 wt% or less.

The curable epoxy resin composition of the present invention may further comprise one or more curing catalysts. The curing catalysts may be used to promote the reaction between the epoxy resins and the curing agent, in particular, when the curing agent is the anhydride compound. Examples of suitable curing catalysts include Lewis acids such as boron trifluoride, and a derivative of boron trifluoride with an amine such as piperidine or methyl ethylamine; tertiary amines such as triethylamine, tripropylamine, tributylamine, benzyldimethylamine, diethyl aminopropylamine, and tris(dimethylaminomethyl)phenol; imidazole derivatives such as 1-methyl imidazole, 2-methyl imidazole, 2-ethyl-4-methylimidazole, 2-isopropylimidazole, 1-propylimidazole, 1-cyanoethyl-2-ethyl-4-methylimidazole, and 2-heptadecylimidazole; onium compounds such as ethyltriphenylphosphonium tetrahaloborate, tetrabutylphosphonium chloride, tetrabutylphosphonium acetate, tetrabutylphosphonium diacetate, ethyltriphenylphosphonium acetate, tetrabutylphosphonium tetrahaloborate, butyltriphenylphosphonium tetrabromobisphenate, butyltriphenylphosphonium bisphenate, butyltriphenylphosphonium bicarbonate, benzyltrimethylammonium chloride, benzyltrimethylammonium hydroxide, benzyltrimethylammonium tetrahaloborate, tetramethylammonium hydroxide, tetrabutylammonium hydroxide, and tetrabutylammonium tetrahaloborate; ureas compounds such as 3-(3-chloro-4-methylphenyl)-1, 1-dimethylurea, phenyldimethylurea, p-chlorophenyl-N, N-dimethylurea, 3-phenyl-1, 1-dimethylurea, 3,4-dichlorophenyl-N, N-dimethylurea, N,N-dimethylurea, and N-isobutyl-N',N'-dimethylurea; or mixtures thereof. Preferred curing catalysts are triethylamine, tripropylamine; 2-methyl imidazole; 2-ethyl-4-methylimidazole; 1-cyanoethyl-2-ethyl-4-methylimidazole; ethyltriphenylphosphonium acetate; benzyldimethylamine; 1,1-dimethyl-3-phenylurea; or mixtures thereof.

The curing catalyst useful in the present invention may be present in an amount of from 0 to 2 wt%, from 0.01 to 1.5 wt%, or from 0.1 to 1 wt%, based on the total weight of the curable epoxy resin composition.

In addition to the epoxy resin of Formula (I), the curable epoxy resin composition of the present invention may also comprise one or more additional epoxy resins. In a preferred embodiment, one additional epoxy resin (or "second epoxy") is used, and it may be any type of epoxy resins that are different from the epoxy resin of Formula (I). Examples of suitable additional epoxy resins include ERL™ 4221 cylcoaliphatic epoxy resin (ERL is a trademark of The Dow Chemical Company), D.E.R. 858 oxazolidone ring-containing epoxy resin both available from The Dow Chemical Company; or mixtures thereof. The additional epoxy resin should be used in an amount that does not compromise the transparency property of cured products made from the curable epoxy resin composition. For example, when used, the concentration of the additional epoxy resin may be less than 50 wt%, less than 30 wt%, or even less than 10 wt%, based on the total epoxy resin weight in the curable epoxy resin composition.

The curable epoxy resin composition of the present invention may further comprise an additional toughening agent. Additional toughening agent herein refers to a toughening agent that has a different structure with the Reaction Product described above. Examples of suitable additional toughening agents include polyols, linear polybutadiene-polyacrylonitrile copolymers, oligomeric polysiloxanes, organopolysiloxane resins, carboxyl terminated butadiene acrylonitrile rubber (CTBN), polysulfide-based toughening agents, amine terminated butadiene nitrile, polythioethers, or mixtures thereof. When used, the additional toughening agent should be present in an amount without compromising the impact strength and transparency property of the resultant cured products. For example, the concentration of the additional toughening agent may be 5 wt% or less, 3 w% or less, or even 1 wt% or less, based on the total weight of the curable epoxy resin composition. If the concentration of the additional toughening agent is higher than 5 wt%, cured products made from such curable epoxy resin composition may have a clarity value of less than 30%.

The curable epoxy resin composition of the present invention may further comprise one or more of the following additives: stabilizers, surfactants, flow modifiers, matting agents, degassing agents, fillers, flame retardants such as aluminum trihydroxide and magnesium hydroxide, curing initiators, curing inhibitors, wetting agents, colorants or pigments, thermoplastics, processing aids, ultraviolet (UV) blocking compounds, fluorescing compounds, UV stabilizers, antioxidants, mold release agents, and mixtures thereof. Fillers, mold release agents, wetting agents and their combinations are desirably used in the present invention. Examples of suitable fillers include silica, talc, quartz, mica, zinc peroxide, titanium dioxide, aluminum silicate, or mixtures thereof. The concentration of the additives may be, based on the total weight of the curable epoxy resin composition, from 0 to 30 wt%, from 0.01 to 20 wt%, or from 0.1 to 10 wt%.

The curable epoxy resin composition of the present invention is prepared by admixing (a) at least one epoxy resin comprising, based on the total epoxy resin weight, at least 50 wt% of the epoxy resin of Formula (I); (b) the curing agent; and (c) the Reaction Product. Other optional components described above may also be added. Components of the curable epoxy resin composition may be admixed in any order to provide the curable epoxy resin composition of the present invention. Any of the above-mentioned optional components may also be added to the composition during or prior to the mixing to form the composition.

The curable epoxy resin composition of the present invention may have a viscosity of less than 4,000 mPa.s, less than 3,500 mPa.s, less than 3,000 mPa.s, or even less than 1,750 mPa.s, as determined by the ASTM D-2196 method at 25°C.

When the curable epoxy resin composition of the present invention is cured, the resultant cured product, the reaction product of the curable epoxy resin composition, has a clarity value of 30% or more, 40% or more, 50% or more, or even 70% or more, according to the test method described in the Examples section below. In some embodiments, the impact strength of the resulting cured epoxy resin composition is increased by 10% or more, 30% or more, or even 100% or more, compared to that of epoxy resin compositions comprising epoxy resins alone upon curing.

The curable epoxy resin composition of the present invention may comprise a coating, a composite or an adhesive. Applications of the curable epoxy resin composition may include in fiber reinforced composites production in various production methods including filament winding, pultrusion, resin transfer molding, vacuum assisted infusion and prepreg process. The fiber reinforced composites may be insulating composites or pressure vessels. The fiber reinforced composites may comprise a reinforcing fiber embedded in a thermoset resin, wherein the thermoset resin comprises the curable epoxy resin composition of the present invention upon curing. Preferably, the reinforcing fiber is a continuous reinforcing fiber. Examples of suitable reinforcing fibers include carbon fibers, graphite fibers, boron fibers, quartz fibers, aluminum oxide-containing fibers, glass fibers, cellulose fibers, silicon carbide fibers or silicon carbide fibers containing titanium, or mixtures thereof. Another application area may be in electrical insulation and encapsulation such as light emitting diode encapsulation by application methods including casting, potting and automatic pressurized gelation (APG). The curable epoxy resin composition can also be used as potting material for road pavement and civil engineering. By adequate application methods such as spray, roller or dip, the curable epoxy resin composition can also be used as structural adhesives, and coatings for a great variety of end uses including ship, marine containers, machinery, structural steel frames, and automotives.

Curing of the curable epoxy resin composition of the present invention may be carried out from room temperature ($23\pm2$°C) up to 250°C, for predetermined periods of time which may be from minutes up to hours, depending on curing agent, and curing catalyst, if used. Generally, the time for curing or partially curing the epoxy resin composition may be from 2 minutes to 24 days, from 0.5 hour to 7 days, or from one hour to 24 hours. When the anhydride compound or the cycloaliphatic polyamine is used as the curing agent, curing temperature may be in a range of from 60 to 250°C, from 100 to 230°C, or from 120 to 220°C. Curing of the curable epoxy resin composition may be staged to prevent exotherms. Staging, for example, includes curing for a period of time at a first temperature followed by curing for a period of time at a second temperature higher than the first temperature. Staged curing may include two, three or more curing stages, and may commence at temperatures below 180°C and can be commenced at temperatures below 150°C. A three-stage curing of the curable epoxy resin composition may be used. When the polyoxyalkylene polyamine is used as the curing agent, curing the curable epoxy resin composition may be conducted at 100°C or less, 80°C or less, 60°C or less, or even at room temperature.

## EXAMPLES

The following examples illustrate embodiments of the present invention. All parts and percentages are by weight unless otherwise indicated.

D.E.R. 383 resin, available from The Dow Chemical Company, is a diglycidyl ether of bisphenol A and has an EEW of about 180.

D.E.R. 671 resin, available from The Dow Chemical Company, is a diglycidyl ether of bisphenol A and has an EEW of about 510.

D.E.N. 438 resin, available from The Dow Chemical Company, is an epoxy novolac resin and has an EEW of about 174.

1, 4-butanediol diglycidyl ether ("BDDGE") is available from Anhui Xinyuan Chemical Company.

Methyltetrahydrophthalic anhydride ("MTHPA") is available from Polynt Chemical Company.

JEFFAMINE D230 amine, available from Huntsman, is polyoxypropylenediamine having an active hydrogen equivalent weight ("AHEW") of 60 and used as a curing agent.

FORTEGRA™ 100 amphiphilic block copolymer is a hydroxyl-terminated poly(ethylene oxide)-b-poly(butylene oxide)-b-poly(ethylene oxide) (PEO-b-PBO-b-PEO). The poly(ethylene oxide) block segment of the block copolymer is an epoxy miscible block, and the poly(butlyene oxide) block segment of the block copolymer is an epoxy immiscible block. This amphiphillic block copolymer has a molecular weight of about 7,000 g/mol and is available from The Dow Chemical Company.

1-cyanoethyl-2-ethyl-4-methylimidazole ("2e4mz-cn") is available from Shikoku Chemicals.

Benzyldimethylamine (BDMA) is used as a catalyst and is available from Jiangdu Dajiang Chemical Co. Ltd.

Dicyandiamide ("DICY"), available from Degussa, has an AHEW of 12 and is used as a curing agent.

DYHARD™ UR-300 catalyst, available from Degussa, is 1,1-dimethyl-3-phenylurea and used as a curing catalyst.

Tetraethylenepentamine (TEPA) is used as a curing agent and is available from Sinopharm Chemical Reagent Co., Ltd.

ERL 4221 resin, available from The Dow Chemical Company, is a cycloaliphatic epoxy resin mixture and has an EEW of 136.

D.E.R. 858 resin, available from The Dow Chemical Company, is an oxazolidone ring-containing epoxy resin.

VORANOL™ 8000LM polyol, available from The Dow Chemical Company, is a polypropylene glycol with a molecular weight of 8000 g/mol and a functionality of 2.

The following standard analytical equipment and methods are used in the Examples.

Epoxide Equivalent Weight (EEW) Analysis

The EEW of an epoxy resin composition is measured according to the ASTM D-1652 method.

Viscosity

Viscosity of an epoxy resin composition is measured according to the ASTM D-2196 method at 25°C.

Acid Value

The acid value of a sample is defined as milligrams potassium hydroxide per gram sample (mg KOH/g). To determine acid value, a weighed sample is completely dissolved in acetone to form a sample solution. Excessive KOH standard solution (concentration: 0.1 molar per liter (mol/L)) is then added into the sample solution using a pipette and stirred for 10 minutes. Then KOH is titrated with HCl solution (concentration: 0.1 mol/L) by a Mettler DL-55 Titrator until the solution shows neutral. The acid value ($X_1$) of the sample is measured as

$$X_1 = (C_1 V_1 - C_2 V_2) * 56.11/m$$

wherein $C_1$ refers to the concentration of KOH solution, mol/L; $V_1$ refers to the volume of KOH solution added into the sample solution, mL; $C_2$ refers to the concentration of HCl solution, mol/L; $V_2$ refers to the volume of HCl solution used to titrate KOH, mL; and m refers to the weight of the sample, gram.

Glass Transition Temperature ($T_g$)

$T_g$ is measured by differential scanning calorimetry (DSC). A 5-10 milligram (mg) sample is analyzed in an open aluminum pan on a TA Instrument DSC Q2000 fitted with an auto-sampler under nitrogen atmosphere. $T_g$ measurement by DSC is with 30-230 °C, 10 degree Celsius per minute (°C/min) (1st cycle), and 30-250 °C, 10 °C/min (2nd cycle). $T_g$ is obtained from the 2nd cycle.

Mechanical Properties

Tensile properties are measured using an Instron 5566 according to the ISO 527 method (test speed: 5 millimeter per minute (mm/min), gauge length: 50 mm).

Flexural properties are measured using an Instron 5566 according to the ISO 178 method (test speed: 2 mm/min, support span: 64 mm).

Impact strength properties are measured according to the ISO 179 method (support span: 62 mm, pendulum energy: 2 Joules).

Scanning Electron Microscopy (SEM) Analysis

Cured epoxy samples are cut into small pieces, then are microtomed (Leica UC7) at room temperature to generate smooth surface. The obtained samples are investigated by SEM (FEI, NanoSEM 630). A thin film of Platinum (Pt) is firstly coated on the sample surface to achieve better conductivity by a sputter coater (Emitech, K575X) equipped with a Pt target with a deposition current of 15 milliamperes (mA) and deposition time of one minute. The SEM images are acquired by a TLD detector (accelerate voltage for the electron beam: 5 kilovolts (kV), working distance: 6-7 mm).

Clarity

A BYK haze-gard dual haze meter is used to evaluate the clarity of cured epoxy samples. Clarity is calculated using the following equation:

$$\text{Clarity} = \text{Transmittance}*(1\text{-Haze})$$

A clarity value of at least 30% is acceptable. The higher the clarity value, the better clarity.

Synthesis of the Reaction Product in the Composition of the Present Invention

100 grams (g) of MTHPA, 898 g of FORTEGRA 100 copolymer, and 2 g of BDMA catalyst were charged into a flask purged with nitrogen. The mixture obtained was heated to 110°C and maintained at 110±5°C for 2 hours, while stirring at 200 revolutions per minute (rpm). The resultant product ("Reaction Product") showed ester groups at 1735-1738 $cm^{-1}$ while losing most intensity of the anhydride double bands at 1858 and 1772 $cm^{-1}$, as confirmed by Fourier Transform Infrared (FT-IR) spectra. The Reaction Product had a viscosity of 6,010 mPa.s and an acid value of 56 mg KOH/g.

Synthesis of Comparative (Comp) Adduct

100 g of MTHPA, 898 g of VORANOL 8000LM polyol and 2 g of BDMA catalyst were charged into a flask purged with nitrogen. A mixture obtained was heated to 110°C and maintained at 110±5 °C for 2 hours, while stirring at 200 rpm. The resultant product ("Comp Adduct") had ester groups at 1735-1738 $cm^{-1}$ while losing most intensity of the anhydride double bands at 1858 and 1772 $cm^{-1}$, as confirmed by FT-IR spectra. The Comp Adduct had a viscosity of 7,005 mPa.s and an acid value of 57 mg KOH/g.

Examples (Exs) 1-3 and Comparative Examples (Comp Exs) A-H

Epoxy resin compositions of Exs 1-3 and Comp Exs A-H were prepared based on formulations shown in Table 1. All components of an epoxy composition were mixed and stirred by a disperser at 900 rpm for 10 minutes, followed by vacuum degassing at 50°C until no bubbles were visible. The degassed mixture was poured into pre-heated glass molds (100°C). The resultant castings were then cured in an oven at 100°C for 2 hours, 120°C for 2 hours, and 160°C for 2 hours. Cured castings obtained were slowly cooled down to 30°C in the oven.

Comp Exs I-K

Epoxy resin compositions of Comp Exs I-K were prepared based on formulations shown in Table 2. All components of an epoxy resin composition were mixed by a speed mixer at 2500 rpm for 2 minutes, followed by vacuum degassing at 40 °C until no bubbles were visible. The degassed mixture was poured into pre-heated glass molds (100°C). The resultant castings were then cured in an oven at 150°C for 2 hours. Cured castings obtained were slowly cooled down to 30°C in the oven.

Ex 4 and Comp Ex L

Epoxy resin compositions of Ex 4 and Comp Ex L were prepared based on formulations shown in Table 3. All components of an epoxy resin composition were mixed by a speed mixer at 2500 rpm for 2 minutes, followed by vacuum degassing at 30°C until no bubbles were visible. The degassed mixture was poured into pre-heated glass molds (80°C). The resultant castings were then cured in an oven at 80°C for 1 hour and 150°C for 3 hours. Cured castings obtained were slowly cooled down to 30°C in the oven.

Ex 5 and Comp Exs M-P

Epoxy resin compositions of Ex 5 and Comp Exs M-P were formed by mixing the ingredients described in Table 4. All components of an epoxy resin composition were mixed by a speed mixer at 2500 rpm for 2 minutes, followed by vacuum degassing at 30°C until no bubbles were visible. The degassed mixture was poured into glass molds. The resultant castings were then cured at room temperature for 24 hours to give cured castings.

The mechanical and transparency properties of the cured castings prepared as described above were evaluated according to the test methods described above and were reported in Tables 1-4.

As shown in Table 1, the addition of FORTEGRA 100 copolymer (Comp Ex C), VORANOL 8000LM polyol (Comp Ex D), or the Comp Adduct (Comp Ex E) into epoxy resins provided the resultant cured castings with unacceptable low clarity. The epoxy resin compositions of Comp Exs F and G comprising 10 wt% or 30 wt% of bisphenol A epoxy resin, respectively, provided the resultant cured castings with clarity values much lower than 30%. The epoxy resin composition of Comp Ex H comprising bisphenol A epoxy resin, the Reaction Product, and 2e4mz-cn as the curing agent provided the resultant cured castings with a clarity value close to zero. The cured castings of Comp Exs C-H showed phase separation and their dispersed phase had a particle diameter of more than 500 nanometers (nm) according to the SEM analysis.

In contrast, cured castings made from the combination of the anhydride curing agent, the Reaction Product, and at least 50 wt% of the epoxy resin of Formula (I) were transparent to the naked eye (Exs 1-3), which provided a clarity value of much higher than 30%. The cured casting of Ex 1 also showed an impact strength of 36 kilojoules per square meter (kJ/m2). Compared to Comp Ex A, the cured casting of Ex 1 showed higher impact strength (about 89.5% increase), flexural strain, tensile elongation, and tensile strength while maintaining $T_g$. Compared to Comp Ex B, the cured casting of Ex 2 also showed higher impact strength (about 19% increase) while maintaining $T_g$. The cured castings of Exs 1-3 showed phase separation and their dispersed phase had a particle diameter of less than 250 nm according to the SEM analysis.

Table 1

| | Ex 1 | Ex 2 | Ex 3 | Comp Ex A | Comp Ex B | Comp Ex C | Comp Ex D | Comp Ex E | Comp Ex F | Comp Ex G | Comp Ex H |
|---|---|---|---|---|---|---|---|---|---|---|---|
| Curable Epoxy Resin Composition, gram | | | | | | | | | | | |
| D.E.R. 383 Resin | 200 | 36 | 50 | 200 | 36 | 200 | 200 | 200 | 10 | 30 | 100 |
| D.E.R. 671 Resin | 0 | 18 | 0 | 0 | 18 | 0 | 0 | 0 | 0 | 0 | 0 |
| D.E.N. 438 Resin | 0 | 36 | 0 | 0 | 36 | 0 | 0 | 0 | 0 | 0 | 0 |
| ERL 4221 Resin | 0 | 0 | 40 | 0 | 0 | 0 | 0 | 0 | 72 | 56 | 0 |
| D.E.R. 858 Resin | 0 | 0 | 10 | 0 | 0 | 0 | 0 | 0 | 18 | 14 | 0 |
| FORTEGRA 100 Copolymer | 0 | 0 | 0 | 0 | 0 | 14 | 0 | 0 | 0 | 0 | 0 |
| VORANOL 8000LM Polyol | 0 | 0 | 0 | 0 | 0 | 0 | 14 | 0 | 0 | 0 | 0 |
| Reaction Product | 15.6 | 10 | 7 | 0 | 0 | 0 | 0 | 0 | 7 | 7 | 7 |
| Comp Adduct | 0 | 0 | 0 | 0 | 0 | 0 | 0 | 15.6 | 0 | 0 | 0 |
| MTHPA | 172.7 | 68.6 | 93.5 | 174.3 | 68.6 | 174.3 | 174.3 | 172.7 | 98.5 | 96 | 0 |
| 2e4mz-cn | 3.5 | 1.4 | 1.87 | 3.5 | 1.4 | 3.5 | 3.5 | 3.5 | 1.97 | 1.92 | 8.7 |
| Properties of Cured Epoxy Resin Composition | | | | | | | | | | | |
| $T_g$, °C | 141 | 151 | -- | 143.8 | 152 | 139.2 | 135 | 136 | -- | -- | -- |
| Flexural Stress at Yield, Megapascals (MPa) | 117 | -- | -- | 127 | -- | 111 | 110 | 112 | -- | -- | -- |
| Flexural Strain at Yield, % | 6.5 | -- | -- | 5.5 | -- | 5.3 | 5.4 | 5.5 | -- | -- | -- |
| Automatic Young's Flexural Modulus, MPa | 2781 | -- | -- | 2995 | -- | 2719 | 2696 | 2695 | -- | -- | -- |
| Tensile Strength at Yield, MPa | 70 | -- | -- | 53 | -- | 72 | 60 | 65 | -- | -- | -- |
| Elongation at Yield, % | 3.5 | -- | -- | 2.1 | -- | 3.6 | 2.92 | 3.21 | -- | -- | -- |
| Automatic Young's Modulus, MPa | 2722 | -- | -- | 3084 | -- | 2895 | 2800 | 2887 | -- | -- | -- |
| Impact Strength, $kJ/m^2$ | 36 | 25 | -- | 19 | 21 | 28 | -- | -- | -- | -- | -- |
| Transparent | Yes | Yes | Yes | Yes | Yes | No | No | No | No | No | No |
| Clarity, % | 51.1 | 48 | 41 | 56 | 58 | 2.5 | 0 | 0 | 8.2 | 14.6 | 0.004 |

As shown in Table 2, the clarity values of cured castings made from the combination of epoxy resins, DICY curing agent with FORTEGRA 100 Copolymer (Comp Ex I) or the Reaction Product (Comp Exs J-K) were too low to be acceptable. The cured castings of Comp Exs I-K showed phase separation and their dispersed phase had a particle diameter of more than 1,000 nm according to the SEM analysis.

Table 2

|  | Comp Ex I | Comp Ex J | Comp Ex K |
|---|---|---|---|
| Curable Epoxy Resin Composition, gram | | | |
| D.E.R. 383 Resin | 36 | 36 | 90 |
| FORTEGRA 100 Copolymer | 10 | 0 | 0 |
| Reaction Product | 0 | 10 | 10 |
| D.E.R. 671 Resin | 18 | 18 | 0 |
| D.E.N. 438 Resin | 36 | 36 | 0 |
| DICY | 5 | 5 | 6 |
| MTHPA | 0 | 0 | 0 |
| UR-300 Catalyst | 2 | 2 | 2 |
| Properties of Cured Epoxy Resin Composition | | | |
| Transparent | No | No | No |
| Clarity, % | 0 | 2.9 | 0 |

As shown in Table 3, the cured casting of Comp Ex L has a clarity value close to zero. The cured casting of Ex 4 was transparent to the naked eye, and showed a clarity value of much higher than 30%. Compared to the cured casting of Comp Ex L, the cured casting of Ex 4 showed higher impact strength (about 18% increase) while maintaining $T_g$ and flexural properties. The cured casting of Ex 4 showed phase separation and its dispersed phase had a particle diameter of less than 100 nm according to the SEM analysis. In contrast, the cured casting of Comp Ex L showed phase separation and its dispersed phase had a particle diameter of more than 500 nm according to the SEM analysis.

Table 3

|  | Comp Ex L | Ex 4 |
|---|---|---|
| Curable Epoxy Resin Composition, gram | | |
| D.E.R. 383 Resin | 71.43 | 71.43 |
| BDDGE | 26.05 | 26.05 |
| FORTEGRA 100 Copolymer | 2.52 | 0 |
| Reaction Product | 0 | 2.52 |
| IPDA | 100 | 100 |
| Properties of Cured Epoxy Resin Composition | | |
| $T_g$, °C | 96 | 96 |
| Flexural Stress at Yield, MPa | 122 | 118 |
| Flexural Strain at Yield, % | 6.3 | 6.3 |
| Automatic Young's Flexural Modulus, MPa | 3056 | 3012 |
| Impact Strength, $kJ/m^2$ | 27.91 | 32.79 |
| Transparent | No | Yes |
| Clarity, % | 0 | 79 |

As shown in Table 4, the clarity values of the cured castings of Comp Exs M-O were too low to be acceptable. In contrast, the cured casting of Ex 5 showed a clarity value of 50.5%. Compared to the cured casting of Comp Ex P, the cured casting of Ex 5 showed higher impact strength (about 35% increase) while maintaining $T_g$. According to the SEM analysis, the cured castings of Comp Exs M-O showed phase separation and their dispersed phase had a particle diameter of more than 500 nm. In contrast, the cured casting of Ex 5 showed phase separation and its dispersed phase had a particle diameter of less than 100 nm.

Table 4

|  | Comp Ex M | Comp Ex N | Comp Ex O | Comp Ex P | Ex 5 |
|---|---|---|---|---|---|
| Curable Epoxy Resin Com position, gram | | | | | |
| D.E.R. 383 Resin | 100.00 | 100.00 | 100.00 | 100.00 | 100.00 |
| JEFFAMINE D230 Amine | 0 | 0 | 33.15 | 33.15 | 33.15 |
| TEPA | 14.36 | 14.36 | 0 | 0 | 0 |
| FORTEGRA100 Copolymer | 8.6 | 0 | 7 | 0 | 0 |
| Reaction Product | 0 | 8.6 | 0 | 0 | 7 |
| Properties of Cured Epoxy Resin Composition | | | | | |
| $T_g$, °C | -- | -- | -- | 85 | 83 |
| Impact Strength, kJ/m$^2$ | -- | -- | -- | 55 | 75 |
| Transparent | No | No | No | Yes | Yes |
| Clarity, % | 0 | 6.1 | 14 | 60.1 | 50.5 |

**Claims**

1. A curable epoxy resin composition comprising:

   (a) at least one epoxy resin comprising, based on the total epoxy resin weight, at least 50 wt% of an epoxy resin (A) comprising one or more diglycidyl ethers of bisphenol A or diglycidyl ethers of bromobisphenol A; oligomeric or polymeric diglycidyl ethers of bisphenol A; oligomeric or polymeric diglycidyl ethers of tetrabromobisphenol A; diglycidyl ethers of bisphenol F or their derivatives; epoxy novolac resins; epoxy cresol novolac resins; or mixtures thereof;
   (b) a curing agent selected from a polyoxypropylenediamine; isophorondiamine; 1,3-cyclohexanebis(methylamine); 4,4'-methylenebis(cyclohexylamine); 1,2-diaminocyclohexane; 4,4'-diaminodicyclohexylmethane; nadic acid anhydride; methyl nadic acid anhydride; copolymers of styrene and maleic acid anhydrides; methyltetrahydrophthalic anhydride; methylhexahydrophthalic anhydride; methyl-(endo)-5-norbornene-2,3-dicarboxylic anhydride; hexahydrophthalic anhydride; tetrahydrophthalic anhydride; pyromellitic dianhydride; ciscyclopentanetetracarboxylic acid dianhydride; hemimellitic anhydride; trimellitic anhydride; naphthalene-1,8-dicarboxylic acid anhydride; phthalic anhydride; dichloromaleic anhydride; dodecenylsuccinic anhydride; glutaric anhydride; maleic anhydride; succinic anhydride; or mixtures thereof; and
   (c) a carboxylic acid group containing reaction product of (i) a carboxylic acid or its anhydride compound, and (ii) an amphiphilic block copolymer having at least one anhydride-reactive group, at least one epoxy resin miscible block segment, and at least one epoxy resin immiscible block segment;

   wherein the curable epoxy resin composition upon curing has a clarity value of at least 30% as measured by a BYK haze-gard dual haze meter.

2. The curable epoxy resin composition of Claim 1, further comprising a curing catalyst.

3. The curable epoxy resin composition of Claim 2, wherein the curing catalyst is present in an amount of from 0.1 to 1 wt%, based on the total weight of the epoxy resin composition.

4. The curable epoxy resin composition of any one of the previous claims, wherein the at least one anhydride-reactive group of the amphiphilic block copolymer comprises at least one hydroxyl functional group.

5. The curable epoxy resin composition of any one of the previous claims, wherein the epoxy resin miscible block segment comprises at least one polyether structure, and the epoxy resin immiscible block segment comprises at least one polyether structure.

6. The curable epoxy resin composition of any one of the previous claims, wherein the epoxy resin immiscible block segment comprises at least one alkylene oxide monomer unit having at least four carbon atoms.

7. The curable epoxy resin composition of any one of the previous claims, wherein the amphiphilic block copolymer is selected from poly(ethylene oxide)-b-poly(butylene oxide), poly (ethylene oxide)-b-poly(butylene oxide)-b-poly(ethylene oxide), or mixtures thereof.

8. The curable epoxy resin composition of any one of the previous claims, wherein the reaction product (c) is present in an amount from 1 to 20 wt%, based on the total weight of the epoxy resin composition.

9. The curable epoxy resin composition of any one of the previous claims, wherein the epoxy resin (A) is selected from a diglycidyl ether of bisphenol A, a diglycidyl ether of bisphenol F, an epoxy novolac resin, an epoxy cresol novolac resin, or mixtures thereof.

10. The curable epoxy resin composition of any one of the previous claims, wherein the molar ratio of total epoxy functionality to total active hydrogen functionality of the epoxy resin composition is from 0.7:1 to 1.3:1.

11. The curable epoxy resin composition of any one of the previous claims, further comprising a diluent, a filler, an additional epoxy resin, glass fibers, carbon fibers, or mixtures thereof.

12. A process for preparing the curable epoxy resin composition of any one of the previous claims, comprising:

admixing (a) at least one epoxy resin comprising, based on the total epoxy resin weight, at least 50 wt% of an epoxy resin (A) comprising one or more diglycidyl ethers of bisphenol A or diglycidyl ethers of bromobisphenol A; oligomeric or polymeric diglycidyl ethers of bisphenol A; oligomeric or polymeric diglycidyl ethers of tetrabromobisphenol A; diglycidyl ethers of bisphenol F or their derivatives; epoxy novolac resins; epoxy cresol novolac resins; or mixtures thereof;
(b) a curing agent selected from a polyoxypropylenediamine; isophorondiamine; 1,3-cyclohexanebis(methylamine); 4,4'-methylenebis(cyclohexylamine); 1,2-diaminocyclohexane; 4,4'-diaminodicyclohexylmethane; nadic acid anhydride; methyl nadic acid anhydride; copolymers of styrene and maleic acid anhydrides; methyltetrahydrophthalic anhydride; methylhexahydrophthalic anhydride; methyl-(endo)-5-norbornene-2,3-dicarboxylic anhydride; hexahydrophthalic anhydride; tetrahydrophthalic anhydride; pyromellitic dianhydride; ciscyclopentanetetracarboxylic acid dianhydride; hemimellitic anhydride; trimellitic anhydride; naphthalene-1,8-dicarboxylic acid anhydride; phthalic anhydride; dichloromaleic anhydride; dodecenylsuccinic anhydride; glutaric anhydride; maleic anhydride; succinic anhydride; or mixtures thereof; and
(c) a carboxylic acid group containing reaction product of (i) a carboxylic acid or its anhydride compound, and (ii) an amphiphilic block copolymer having at least one anhydride-reactive group, at least one epoxy resin miscible block segment, and at least one epoxy resin immiscible block segment;

wherein the curable epoxy resin composition upon curing has a clarity value of at least 30% as measured by a BYK haze-gard dual haze meter.

13. A curable epoxy resin composition of Claim 1 comprising a coating, a composite or an adhesive.

**Patentansprüche**

1. Härtbare Epoxidharzzusammensetzung, umfassend:

(a) mindestens ein Epoxidharz, das, bezogen auf das Gesamtgewicht des Epoxidharzes, mindestens 50 Gew.-% eines Epoxidharzes (A) umfasst, das einen oder mehrere Diglycidylether von Bisphenol-A oder Diglycidylether von Brombisphenol-A, oligomere oder polymere Diglycidylether von Bisphenol-A, oligomere oder polymere Diglycidylether von Tetrabrombisphenol-A, Diglycidylether von Bisphenol-F oder deren Derivate, Epoxid-Novolak-Harze, Epoxid-Kresol-Novolakharze oder Mischungen davon umfasst,

(b) ein Härtungsmittel, ausgewählt aus einem Polyoxypropylendiamin, Isophorondiamin, 1,3-Cyclohexanbis(methylamin), 4,4'-Methylenbis(cyclohexylamin), 1,2-Diaminocyclohexan, 4,4'-Diaminodicyclohexylmethan, Nadinsäureanhydrid, Methylnadinsäureanhydrid, Copolymeren von Styrol und Maleinsäureanhydriden, Methyltetrahydrophthalsäureanhydrid, Methylhexahydrophthalsäureanhydrid, Methyl-(en-do)-5-norbornen-2,3-dicarboxylanhydrid, Hexahydrophthalsäureanhydrid, Tetrahydrophthalsäureanhydrid, Pyromellitdianhydrid, cis-Cyclopentantetracarbonsäuredianhydrid, Hemimellitsäureanhydrid, Trimellitsäureanhydrid, Naphthalen-1,8-dicarbonsäureanhydrid, Phthalsäureanhydrid, Dichlormaleinanhydrid, Dodecenylbernsteinsäureanhydrid, Giutarsäureanhydrid, Maleinanhydrid, Bernsteinsäureanhydrid oder Mischungen davon, und

(c) eine Carbonsäuregruppe, die ein Reaktionsprodukt einer (i) Carbonsäure oder deren Anhydridverbindung und (ii) eines amphiphilen Block-Copolymers mit mindestens einer reaktiven Anhydridgruppe, mindestens einem mit Epoxidharz mischbaren Blocksegment und mindestens einem mit Epoxidharz nicht mischbaren Blocksegment enthält,

worin die härtbare Epoxidharzzusammensetzung beim Härten einen Clarity-Wert von mindestens 30 % besitzt, gemessen mit einem BYK Haze-gard-Dual-Transparenzmessgerät.

2. Härtbare Epoxidharzzusammensetzung nach Anspruch 1, ferner umfassend einen Härtungskatalysator.

3. Härtbare Epoxidharzzusammensetzung nach Anspruch 2, worin der Härtungskatalysator in einer Menge von 0,1 bis 1 Gew.-%, bezogen auf das Gesamtgewicht der Epoxidharzzusammensetzung, vorliegt.

4. Härtbare Epoxidharzzusammensetzung nach einem der vorstehenden Ansprüche, worin die mindestens eine reaktive Anhydridgruppe des amphiphilen Block-Copolymers mindestens eine funktionelle Hydroxylgruppe umfasst.

5. Härtbare Epoxidharzzusammensetzung nach einem der vorstehenden Ansprüche, worin das mit Epoxidharz mischbare Blocksegment mindestens eine Polyetherstruktur umfasst und das mit Epoxidharz nicht mischbare Blocksegment mindestens eine Polyetherstruktur umfasst.

6. Härtbare Epoxidharzzusammensetzung nach einem der vorstehenden Ansprüche, worin das mit Epoxidharz nicht mischbare Blocksegment mindestens eine Alkylenoxidmonomereinheit mit mindestens vier Kohlenstoffatomen umfasst.

7. Härtbare Epoxidharzzusammensetzung nach einem der vorstehenden Ansprüche, worin das amphiphile Block-Copolymer ausgewählt ist aus Poly(ethylenoxid)-b-poly(butylenoxid), Poly(ethylenoxid)-b-poly(butylenoxid)-b-poly(ethylenoxid) oder Mischungen davon.

8. Härtbare Epoxidharzzusammensetzung nach einem der vorstehenden Ansprüche, worin das Reaktionsprodukt (c) in einer Menge von 1 bis 20 Gew.-%, bezogen auf das Gesamtgewicht der Epoxidharzzusammensetzung, vorliegt.

9. Härtbare Epoxidharzzusammensetzung nach einem der vorstehenden Ansprüche, worin das Epoxidharz (A) ausgewählt ist aus einem Diglycidylether von Bisphenol-A, einem Diglycidylether von Bisphenol-F, einem Epoxid-Novolak-Harz, einem Epoxid-Kresol-Novolakharz oder Mischungen davon.

10. Härtbare Epoxidharzzusammensetzung nach einem der vorstehenden Ansprüche, worin das Molverhältnis der gesamten Epoxidfunktionalität zur gesamten aktiven Wasserstofffunktionalität der Epoxidharzzusammensetzung 0.7:1 bis 1,3:1 beträgt.

11. Härtbare Epoxidharzzusammensetzung nach einem der vorstehenden Ansprüche, ferner aufweisend einen Verdünner, einen Füllstoff, ein zusätzliches Epoxidharz, Glasfasern, Kohlenstofffasern oder Mischungen davon.

12. Verfahren zur Herstellung der härtbaren Epoxidharzzusammensetzung nach einem der vorstehenden Ansprüche, umfassend:

Mischen von (a) mindestens einem Epoxidharz, das, bezogen auf das Gesamtgewicht der Epoxidharzzusammensetzung, mindestens 50 Gew.-% eines Epoxidharzes (A) umfasst, das einen oder mehrere Diglycidylether von Bisphenol-A oder Diglycidylether von Brombisphenol-A, oligomere oder polymere Diglycidylether von Bisphenol-A, oligomere oder polymere Diglycidylether von Tetrabrombisphenol-A, Diglycidylether von Tetrabrombisphenol A, Diglycidylether von Bisphenol-F oder deren Derivate, Epoxid-Novolak-Harze, Epoxid-Kresol-Novolakharze oder Mischungen davon umfasst,

(b) einem Härtungsmittel, ausgewählt aus einem Polyoxypropylendiamin, Isophorondiamin, 1,3-Cyclohexanbis(methylamin), 4,4'-Methylenbis(cyclohexylamin), 1,2-Diaminocyclohexan, 4,4'-Diaminodicyclohexylmethan, Nadinsäureanhydrid, Methylnadinsäureanhydrid, Copolymeren von Styrol und Maleinsäureanhydriden, Methyltetrahydrophthalsäureanhydrid, Methylhexahydrophthalsäureanhydrid, Methyl-(endo)-5-nor-bornen-2,3-dicarboxylanhydrid, Hexahydrophthalsäureanhydrid, Tetrahydrophthalsäureanhydrid, Pyromellitdianhydrid, cis-Cyclopentantetracarbonsäuredianhydrid, Hemimellitsäureanhydrid, Trimellitsäureanhydrid, Naphthalen-1,8-dicarbonsäureanhydrid, Phthalsäureanhydrid, Dichlormaleinanhydrid, Dodecenylbernsteinsäureanhydrid, Glutarsäureanhydrid, Maleinanhydrid, Bernsteinsäureanhydrid oder Mischungen davon, und

(c) einer Carbonsäuregruppe, die ein Reaktionsprodukt einer (i) Carbonsäure oder deren Anhydridverbindung und (ii) eines amphiphilen Block-Copolymers mit mindestens einer reaktiven Anhydridgruppe, mindestens einem mit Epoxidharz mischbaren Blocksegment und mindestens einem mit Epoxidharz nicht mischbaren Blocksegment enthält,

worin die härtbare Epoxidharzzusammensetzung beim Härten einen Clarity-Wert von mindestens 30 % besitzt, gemessen mit einem BYK Haze-gard-Dual-Transparenzmessgerät.

13. Härtbare Epoxidharzzusammensetzung nach Anspruch 1, umfassend eine Beschichtung, ein Komposit oder einen Klebstoff.

## Revendications

1. Composition de résine époxyde durcissable comprenant :

(a) au moins une résine époxyde comprenant, par rapport au poids total de résine époxyde, au moins 50 % en poids d'une résine époxyde (A) comprenant un ou plusieurs éthers diglycidyliques de bisphénol A ou des éthers diglycidyliques de bromobisphénol A ; des éthers diglycidyliques oligomères ou polymères de bisphénol A ; des éthers diglycidyliques oligomères ou polymères du tétrabromobisphénol A ; des éthers diglycidyliques de bisphénol F ou leurs dérivés ; des résines époxydes novolaques ; des résines époxydes crésoliques novolaques ; ou leurs mélanges ;

(b) un agent de traitement choisi parmi un polyoxypropylènediamine ; isophorondiamine ; 1,3-cyclohexanebis(méthylamine) ; 4,4'-méthylènebis(cyclohexylamine) ; 1,2-diaminocyclohexane ; 4,4'-diaminodicyclohexylméthane ; anhydride d'acide nadique ; anhydride d'acide méthylique nadique ; copolymères de styrène et d'anhydrides d'acide maléique ; anhydride méthyltétrahydrophtalique ; anhydride méthylhexahydrophtalique ; anhydride méthyl-(endo)-5-norbomène-2,3-dicarboxylique ; anhydride hexahydrophtalique ; anhydride tétrahydrophtalique ; dianhydride pyromellitique ; dianhydride d'acide ciscyclopentanetetracarboxylique ; anhydride hémimellitique ; anhydride trimellitique ; anhydride naphtalène-1,8-acide dicarboxylique ; anhydride phtalique ; anhydride dichloromaléique ; anhydride dodécénylsuccinique ; anhydride glutarique ; anhydride maléique ; anhydride succinique ; ou leurs mélanges ; et

(c) un produit réactionnel contenant un groupe acide carboxylique (i) d'un acide carboxylique ou son composé anhydride, et (ii) d'un copolymère séquencé amphiphile ayant au moins un groupe réactif anhydride, au moins un segment séquencé miscible à la résine époxyde et au moins un segment séquencé non miscible à la résine époxyde ;

la composition de résine époxyde durcissable lors du durcissement a une valeur de clarté d'au moins 30 % mesurée par un visibilimètre BYK double.

2. Composition de résine époxyde durcissable selon la revendication 1, comprenant en outre un catalyseur de durcissement.

3. Composition de résine époxyde durcissable selon la revendication 2, le catalyseur de durcissement étant présent en proportion de 0,1 à 1 % en poids, par rapport au poids total de la composition de résine époxyde.

4. Composition de résine époxyde durcissable selon l'une quelconque des revendications précédentes, l'au moins un groupe réactif anhydride du copolymère à blocs amphiphile comprenant au moins un groupe fonctionnel hydroxyle.

**5.** Composition de résine époxyde durcissable selon l'une quelconque des revendications précédentes, le segment de séquence miscible à la résine époxyde comprenant au moins une structure polyéther, et le segment de séquence non miscible à la résine époxyde comprenant au moins une structure polyéther.

**6.** Composition de résine époxyde durcissable selon l'une quelconque des revendications précédentes, le segment de séquence non miscible à la résine époxyde comprenant au moins une unité monomère d'oxyde d'alkylène ayant au moins quatre atomes de carbone.

**7.** Composition de résine époxyde durcissable selon l'une quelconque des revendications précédentes, le copolymère à blocs amphiphile étant choisi parmi poly(oxyde d'éthylène)-b-poly(oxyde de butylène), poly(oxyde d'éthylène)-b-poly(oxyde de butylène)-b-poly(oxyde d'éthylène), ou des mélanges de ceux-ci.

**8.** Composition de résine époxyde durcissable selon l'une quelconque des revendications précédentes, le produit réactionnel (c) étant présent dans une quantité de 1 à 20 % en poids par rapport au poids total de la composition de résine époxyde.

**9.** Composition de résine époxyde durcissable selon l'une quelconque des revendications précédentes, la résine époxyde (A) étant choisie parmi un éther diglycidylique de bisphénol A, un éther diglycidylique de bisphénol F, une résine époxyde novolaque, une résine époxyde crésolique novolaque, ou des mélanges de ceux-ci.

**10.** Composition de résine époxyde durcissable selon l'une quelconque des revendications précédentes, le rapport molaire de la fonctionnalité époxy totale par rapport à la fonctionnalité hydrogène actif total de la composition de résine époxyde étant de 0,7:1 à 1,3:1.

**11.** Composition de résine époxyde durcissable selon l'une quelconque des revendications précédentes, comprenant en outre un diluant, une charge, une résine époxyde supplémentaire, des fibres de verre, des fibres de carbone ou des mélanges de ceux-ci.

**12.** Procédé de préparation de la composition de résine époxyde durcissable selon l'une quelconque des revendications précédentes, comprenant les étapes consistant à :

mélanger (a) au moins une résine époxyde comprenant, par rapport au poids total de résine époxyde, au moins 50 % en poids d'une résine époxyde (A) comprenant un ou plusieurs éthers diglycidyliques de bisphénol A ou des éthers diglycidyliques de bromobisphénol A ; des éthers diglycidyliques oligomères ou polymères de bisphénol A ; des éthers diglycidyliques oligomères ou polymères de tétrabromobisphénol A ; des éthers diglycidyliques de bisphénol F ou leurs dérivés ; des résines époxydes novolaques ; des résines époxydes crésoliques novolaques ; ou leurs mélanges ;

(b) un agent de traitement choisi parmi un polyoxypropylènediamine ; isophorondiamine ; 1,3-cyclohexanebis(méthylamine) ; 4,4'-méthylènebis(cyclohexylamine) ; 1,2-diaminocyclohexane ; 4,4'-diaminodicyclohexylméthane ; anhydride d'acide nadique ; anhydride d'acide méthylique nadique ; copolymères de styrène et d'anhydrides d'acide maléique ; anhydride méthyltétrahydrophtalique ; anhydride méthylhexahydrophtalique ; anhydride méthyl-(endo)-5-norbomène-2,3-dicarboxylique ; anhydride hexahydrophtalique ; anhydride tétrahydrophtalique ; dianhydride pyromellitique ; dianhydride d'acide ciscyclopentanetetracarboxylique ; anhydride hémimellitique ; anhydride trimellitique ; anhydride naphtalène-1,8-acide dicarboxylique ; anhydride phtalique ; anhydride dichloromaléique ; anhydride dodécénylsuccinique ; anhydride glutarique ; anhydride maléique ; anhydride succinique ; ou leurs mélanges ; et

(c) un produit réactionnel contenant un groupe acide carboxylique (i) d'un acide carboxylique ou son composé anhydride, et (ii) d'un copolymère séquencé amphiphile ayant au moins un groupe réactif anhydride, au moins un segment séquencé miscible à la résine époxyde et au moins un segment séquencé non miscible à la résine époxyde ;

la composition de résine époxyde durcissable lors du durcissement a une valeur de clarté d'au moins 30 % mesurée par un visibilimètre BYK double.

**13.** Composition de résine époxyde durcissable selon la revendication 1 comprenant un enrobage, un composite ou un adhésif.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011114257 A